# EUROPEAN PATENT APPLICATION

(11) **EP 4 518 477 A1**
(43) Date of publication of application: **05.03.2025**
(21) Application number: 22939151.1
(22) Date of filing: 28.04.2022
(51) Int. Cl.: H04W 72/04

(54) **UPLINK TRANSMISSION CONFIGURATION METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/090093
(87) International publication number: WO 2023/206301

(57) **Abstract**

Provided in the embodiments of the present disclosure are an uplink transmission configuration method and apparatus, a communication device and a storage medium. The uplink transmission configuration method may comprise: for an uplink transmission, configuring different transmission configuration indications (TCIs) for different antenna panels of a terminal.

## Description

### TECHNICAL FIELD

The disclosure relates to, but is not limited to, the field of wireless communication technology, and more particularly, to a method for configuring an uplink transmission, an apparatus for configuring an uplink transmission, a communication device, and a storage medium.

### BACKGROUND

In order to improve coverage at the cell edge and provide more balanced service quality within a service area, multi-point coordination remains an important technical means in New Radio (NR) systems.

From the perspective of network architecture, network deployment with a large number of distributed access points and centralized baseband processing may be more conducive to providing a balanced user experience in rate, and can significantly reduce delay and signaling overhead caused by handover.

With the increase of the frequency band increases, from the perspective of ensuring network coverage, relatively dense deployment of access points is required. In the high-frequency band, with the improvement of the integration of active antenna devices, there will be a greater tendency to adopt modular active antenna arrays. An antenna array of each transmission and reception point (TRP) can be divided into several relatively separate antenna panels, so the shape and the number of ports of the entire array can be flexibly adjusted according to deployment scenarios and service needs.

The antenna panels or TRPs can be connected by optical fibers for more flexible distributed deployment.

In the millimeter wave band, as the wavelength decreases, blocking effect caused by obstacles such as human bodies or vehicles may become more significant.

In this case, from the perspective of ensuring robustness of a link connection, coordination between multiple TRPs or panels can be used for transmission/reception from multiple beams at multiple angles, thereby reducing adverse impacts caused by the blocking effect.

### SUMMARY

Embodiments of the present disclosure provide a method for configuring an uplink transmission, an apparatus for configuring an uplink transmission, a communication device, and a storage medium.

Embodiments of a first aspect of the present disclosure provide a method for configuring an uplink transmission, including:
for the uplink transmission, configuring different transmission configuration indications (TCI) for different antenna panels of a terminal.

Embodiments of a second aspect of the present disclosure provide an apparatus for configuring an uplink transmission, including:
a processing module, configured to, for the uplink transmission, configure different TCIs for different antenna panels of a terminal.

Embodiments of a third aspect of the present disclosure provide a communication device, including a processor, a transceiver, a memory, and an executable program stored in the memory and capable of being executed by the processor. When the processor executes the executable program, the processor performs the method for configuring uplink transmission provided in the first aspect.

Embodiments of a fourth aspect of the present disclosure provide a computer storage medium on which a computer program is stored. When the computer program is executed by a processor, the method for configuring uplink transmission provided in the first aspect can be implemented.

According to the technical solution provided by the embodiments of the present disclosure, if multiple antenna panels of the terminal are each configured with a corresponding TCI, the multiple antenna panels of the terminal can simultaneously perform the uplink transmission, which can improve the throughput of a communication system and enhance transmission reliability

It should be understood that the above general description and the following detailed description are only illustrative and explanatory, and do not limit the embodiments of the present disclosure.

### BRIEF DESCRIPTION OF THE DRAWINGS

The accompanying drawings, which are incorporated in and constitute a part of the description, illustrate embodiments consistent with the disclosure, and serve to explain principles of the embodiments of the disclosure together with the description.
FIG. 1 is a schematic diagram of a wireless communication system according to an embodiment.
FIG. 2 is a flow chart of a method for configuring an uplink transmission according to an embodiment.
FIG. 3 is a schematic diagram of transmission of multiple antennas of a terminal according to an embodiment.
FIG. 4A is a schematic diagram of a non-coherent joint transmission (NC-JT) according to an embodiment.
FIG. 4B is a schematic diagram of a coherent joint transmission (C-JT) according to an embodiment.
FIG. 5A is a flow chart of a method for configuring an uplink transmission according to an embodiment.
FIG. 5B is a flow chart of a method for configuring an uplink transmission according to an embodiment.
FIG. 5C is a f flow chart of a method for configuring an uplink transmission according to an embodiment.
FIG. 6 is a block diagram of an apparatus for configuring an uplink transmission according to an embodiment.
FIG. 7 is a block diagram of a terminal according to an embodiment.
FIG. 8 is a block diagram of a communication device according to an embodiment.

### DETAILED DESCRIPTION

Exemplary embodiments will be described in detail here, and their examples are shown in the accompanying drawings. When the following description refers to the drawings, unless otherwise indicated, the same number in different drawings indicates the same or similar elements. The embodiments described in the following exemplary embodiments do not represent all embodiments consistent with the embodiments of the disclosure. On the contrary, they are only examples of devices and methods consistent with some aspects of the embodiments of the disclosure as detailed in the appended claims.

The terms used in the embodiments of the present disclosure are only for the purpose of describing specific embodiments, and are not intended to limit the embodiments of the present disclosure. The singular forms of "one", "said" and "the" used in the embodiments of the present disclosure and the appended claims are also intended to include the majority forms, unless the context clearly indicates other meanings. It should also be understood that the terms "and/or" as used herein refer to and include any or all possible combinations of one or more associated listed items.

It should be understood that although the terms first, second, third, etc. may be used to describe various information in the embodiments of the present disclosure, such information should not be limited to these terms. These terms are only used to distinguish the same type of information from each other. For example, without departing from the scope of the embodiments of the present disclosure, the first information can also be called the second information, and similarly, the second information can also be called the first information. Depending on the context, the word "if" as used here can be interpreted as "when" or "while" or "in response to determining".

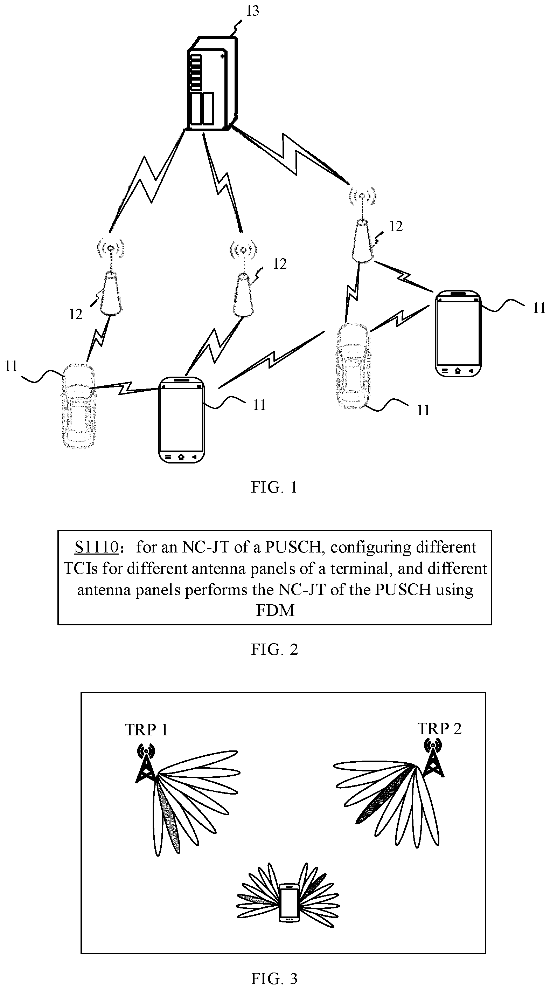

As illustrated in FIG. 1, it illustrates a block diagram of a wireless communication system provided by an embodiment of the present disclosure. As illustrated in FIG. 1, the wireless communication system is a communication system based on cellular mobile communication technology. The wireless communication system may include several terminals 11 and several access devices 12.

The terminal 11 may refer to a device that provides voice and/or data connectivity to a user. The terminal 11 can communicate with one or more core networks through a radio access network (RAN). The terminal 11 may be an Internet-of- Things terminal, such as a sensor device, a mobile phone (also called as "cellular" phone) and a computer with an Internet-of- Things terminal, such as fixed, portable, pocket, handheld, computer built-in or vehicle-mounted devices, for example, a station (STA), a subscriber unit, a subscriber station, a mobile station, a mobile, a remote station, an access point, a remote terminal, an access terminal, a user terminal, a user agent, a user device, or a user equipment (UE). Alternatively, the terminal 11 can also be a device of an unmanned aerial vehicle. Alternatively, the terminal 11 can also be a vehicle-mounted device, for example, an on-board computer with a wireless communication function, or a wireless communication device connected to an external on-board computer. Alternatively, the terminal 11 can also be a roadside device, for example, a streetlamp, a signal lamp or other roadside devices with wireless communication functions.

The access device 12 may be a network device in the wireless communication system. The wireless communication system can be the fourth generation mobile communication (4G) system, also known as Long Term Evolution (LTE) system. Alternatively, the wireless communication system can also be the fifth generation mobile communication (5G) system, also known as a new radio (NR) system or a 5G NR system. Alternatively, the wireless communication system can also be a next generation system of the 5G system. The access network in the 5G system can be called NG-RAN (new generation radio access network). Alternatively, the wireless communication system can also be a machine type communication (MTC) system.

The access device 12 can be an evolutionary access device (eNB) used in the 4G system. Alternatively, the access device 12 can also be an access device (gNB) adopting a centralized and distributed architecture in the 5G system. When the access device 12 adopts the centralized and distributed architecture, it usually includes a central unit (CU) and at least two distri buted units (DU). The central unit is equipped with protocol stacks of a Packet Data Convergence Protocol (PDCP) layer, a Radio Link Control (RLC) layer and a Media Access Control (MAC) layer. The distribution unit is provided with a physical (PHY) layer protocol stack. Embodiments of the present disclosure do not limit the specific implementation mode of the access device 12.

A wireless connection can be established between the access device 12 and the terminal 11 through a wireless radio. In different embodiments, the wireless radio is a wireless radio based on the fourth generation mobile communication network technology (4G) standard. Alternatively, the wireless radio is a wireless radio based on the fifth generation mobile communication network technology (5G) standard. For example, the wireless radio is a new radio. Alternatively, the wireless radio can also be a wireless radio based on a standard of the next generation mobile communication network technical of 5G.

As shown in FIG 2, embodiments of the disclosure provide a method for configuring an uplink transmission, the method includes the followings.

S2110, for uplink transmission, different transmission configuration indications (TCIs) are configured for different antenna panels of a terminal.

In some embodiments, a communication device that configures different TCIs for different antenna panels of the terminal may be a base station.

The terminal may include multiple antenna panels. For example, the terminal may include two antenna panels, and the orientations of the two antenna panels of the terminal may be opposite. One antenna panel includes one or more antenna dipoles.

As shown in FIG. 3, a terminal has two antenna panels and can send data to transmission and reception point (TRP) 1 and TRP 2 of the base station simultaneously.

The TCI here is information indicating a beam direction. Different antenna panels have different TCIs (that is, different antenna panels of the terminal are configured with separate TCI states), and beam directions of transmission beams of different antenna panels are individually indicated by their corresponding TCIs. In this way, different antenna panels of the terminal can be used to send uplink data and/or uplink signaling to different TRPs of the base station.

In embodiments of the present disclosure, in addition to the TCIs of the antenna panels of the terminal, the uplink transmission configuration of the terminal may further include at least one of the following:
an uplink transmission type associated with a TCI, for example, by dividing based on a transmission channel, the uplink transmission type includes but is not limited to: a physical uplink shared channel (PUSCH) transmission and/or a physical uplink control channel (PUCCH) transmission; or, by dividing based on transmission scheduling, the uplink transmission type includes but is not limited to: a grant free uplink transmission and/or an uplink transmission scheduled with downlink control information (DCI);
a time-frequency domain resource associated with a TCI;
a demodulation reference signal (DMRS) port combination associated with a TCI;
a number of data transmission layers associated with a TCI;
an uplink transmission association relationship between multiple antenna panels, which includes: the multiple antenna panels performing non-coherent joint transmission (NC-JT) and/or the multiple antenna panels performing coherent joint transmission (C-JT);
a modulation and coding scheme (MCS) associated with a TCI;
a code division multiplexing (CDM) group used by each DMRS port.

In an embodiment, one or more of the above-mentioned transmission configurations may be sent by the base station to the terminal through one or more network signalings, or the above-mentioned uplink transmission configurations may be pre-agreed by a network protocol.

In embodiments of the present disclosure, the uplink transmission type includes but is not limited to:
a physical uplink shared channel (PUSCH) transmission;
   and/or,
a physical uplink shared channel (PUSCH) transmission.

If the multiple antenna panels of the terminal are each configured with corresponding TCI, the multiple antenna panels of the terminal can simultaneously perform the uplink transmission, which can improve the throughput of the communication system and enhance the transmission reliability.

What the PUCCH transmits is uplink control information (UCI).

To support transmissions in different UCI bit number ranges, the PUCCH transmission can be divided into two categories from the perspective of bit number.

One type is a PUCCH format used to carry 1 to 2-bit UCI transmission, and the other type is a PUCCH format used to carry more than 2-bit UCI transmission.

In addition, from the perspective of uplink coverage and transmission delay, the PUCCH transmission can also be divided into two categories. One is a PUCCH transmission in a short PUCCH format, which occupies 1 or 2 symbols for transmission, and the other one is a PUCCH transmission in a long PUCCH format, which occupies 4 to 14 symbols for transmission.

The PUCCH format can be shown in Table 1:

**Table 1**

| PUCCH format | number of symbols | number of RBs | | User multiplexing capacity | number of carried bits |
|---|---|---|---|---|---|
| 0 | 1-2 | 1 | | 12 | ≤2 |
| 1 | 4-14 | 1 | | 12*OCC length | ≤2 |
| 2 | 1-2 | 1, 2, .. , 16 integer | | 0 | >2 |
| 3 | 4-14 | 1, 2, 3, 4, 5, 6, 8, 9, 10, 12, 15, 16 | | 0 | >2 |
| 4 | 4-14 | 1 | | 2 or 4 | >2 |

For PUCCH transmission of the PUCCH format 1/3/4, a number of repetitions at the slot level can be configured through a radio resource control (RRC) signaling nrofSlots, and repeated transmission can be performed in multiple consecutive slots on a same time-frequency resource. Repeated transmission is not supported for the PUCCH format 0/2. The supported number of repetitions is 1, 2, 4, and 8.

Orthogonal cover code (OCC) in Table 1. Illustratively, the uplink transmission type includes one of the following:
a grant free uplink transmission;
an uplink transmission scheduled with downlink control information (DCI).

In some embodiments, the grant free uplink transmission includes but is not limited to at least one of the following:
a grant free PUSCH transmission;
a grant free PUCCH transmission.

The grant free uplink transmission may include, but is not limited to, a configured grant (CG) uplink transmission. For example, the grant free uplink transmission may include, but is not limited to, a CG-PUSCH transmission. The grant free CG-PUSCH may include but is not limited to: CG-PUSCH type 1 and CG PUSCH type 2.

In some embodiments, different TCIs are associated with different control resource pool indexes (CORESTPoolIndex). Different control resource pool indexes are associated with different TRPs of the base station.

Different antenna panels of the terminal are associated with different TCIs, the TCIs are associated with the CORESTPoolIndex, and control resource pools indicated by the CORESTPoolIndex belong to different TRPs.

In this way, through the TCI and the control resource pool index, the uplink transmission configuration from different antenna panels of the terminal to any TRP of the base station is realized.

A control resource set (CORESET) is a set of downlink physical resource grids and a parameter set, and is used to carry DCI information.

In New Radio (NR), the control resource set is located in a specific area of the frequency domain without occupying the full bandwidth.

A CORESET *P* ≤ 3 is configured for the terminal in each downlink bandwidth part (BWP). CORESET 0 is used for system information broadcasting and paging.

In a multi-TRP/antenna panel scenario based on multiple downlink control information (M-DCI), a maximum of 3 control resource sets (CORESET) can be configured in a same downlink BWP. Each TRP must have one CORESET, except for CORESET 0, to schedule the PDSCH, indicate hybrid automatic repeat request response information (HARQ-ACK) to feed back a time domain resources used, and schedule the PUSCH. The remaining CORESET resources are used for public group configuration or beam failure recovery. To receive two PDSCHs within the same reception occasion, at least one more CORESET is added. Taking into account the complexity of the terminal, the number of CORSETs corresponding to each physical downlink control channel configuration (PDCCH-Config) can be increased to 5.

On an activated BWP of the serving cell, a high-layer parameter PDCCH-Config is configured, and the control resource set (ControlResourceSet) contains two different CORESETPoolIndex values [0, 1] to distinguish which transmission point TRP the CORESET resource belongs to.

In an embodiment, the uplink transmission includes: a PUSCH transmission.

One TCI is associated with one transport block (TB) of the PUSCH.

When the base station performs data transmission scheduling, it can schedule at TB granularity. Thus one TCI is associated with one TB of the PUSCH. In this way, different antenna panels of the terminal can be associated with different TBs or the same TB. Therefore, if different TCIs are associated with TBs of different PUSCHs, the terminal can realize simultaneous transmission of multiple TBs at one time, improving the data transmission efficiency of the base station.

Therefore, in some embodiments, different TCIs are used for transmission of the same TB; or different TCIs are used for transmission of different TBs.

For example, in order to improve the reliability of uplink transmission, multiple TCIs can be associated with the same TB. In this way, the base station may have more spatial and/or frequency diversity gain after receiving the TB, thus ensuring the transmission quality of the TB..

Whether different TCIs are associated with the same TB or different TBs can be configured according to channel quality and uplink transmission quality of service (QoS) corresponding to the multiple TCIs of the terminal.

In some embodiments, the uplink transmission includes: a PUCCH transmission.

One TCI is associated with one UCI of the PUCCH transmission.

In some embodiments, if the uplink transmission is a PUCCH transmission, one TCI can be associated with one UCI, and different TCIs can be associated with the same or different UCIs.

That is, in some embodiments, different TCIs are used for the transmission of a same UCI; or different TCIs are used for transmission of different UCIs.

If different TCIs are associated with different UCIs, multiple antenna panels of the terminal can realize transmission of multiple UCIs at the same time, increasing the transmission rate. If different TCIs are associated with the same UCI, multiple antenna panels of the terminal can realize transmission of one UCI at the same time, which can improve the UCI transmission gain.

In an embodiment, one TCI is associated with one demodulation reference signal (DMRS) port combination of the terminal.
one DMRS port combination includes one or more DMRS ports of the terminal.

The DMRS ports included in one DMRS port combination may be some or all ports of the terminal.

For example, if the terminal has two antenna panels and includes 4 DMRS ports, then the TCIs corresponding to the two antenna panels are associated with the first, second, and fourth DMRS ports of the terminal.

The above are just examples, and the specific implementation is not limited to the above examples.

In some embodiments, one TCI is associated with one data transmission layer set; one data transmission layer set includes: one or more data transmission layers.

After original data is converted into codewords, it can be divided into multiple data transmission layers. One TCI can be associated with one data transmission layer set, which can include one or more data transmission layers, for example, 1, 2, 3 or 4 data transmission layers. When configuring the uplink transmission, through the association with the data transmission layer set, compared to enumerating layer identifiers of the data transmission layers associated with each TCI, using network signaling for configuring the uplink transmission can reduce the signaling overhead.

In some embodiments, time-frequency resources of different uplink transmissions do not overlap; or time-frequency resources of different uplink transmissions partially overlap; or time-frequency resources of different uplink transmissions completely overlap.

If the time-frequency resources of different uplink transmissions do not overlap, it means that different PUSCH transmissions and/or PUCCH transmissions use completely different time-frequency domain resources, and there is no interference between them.

In some embodiments, time-frequency resources of different uplink transmissions may partially overlap, that is, part of the frequency domain resources of different uplink transmissions overlap, and/or part of the time domain resources of different uplink transmissions overlap, and some time-frequency domain resources do not overlap.

If the time-frequency resources of different uplink transmissions completely overlap, at least two uplink transmissions use exactly the same time domain resources and use exactly the same frequency domain resources.

Since different antenna panels of the terminal are configured with different TCIs, that is, different antenna panels of the terminal may use beams in different directions to perform the uplink transmission. In this way, even if the time-frequency domain resources of the uplink transmission partially or completely overlap, there is still little interference..

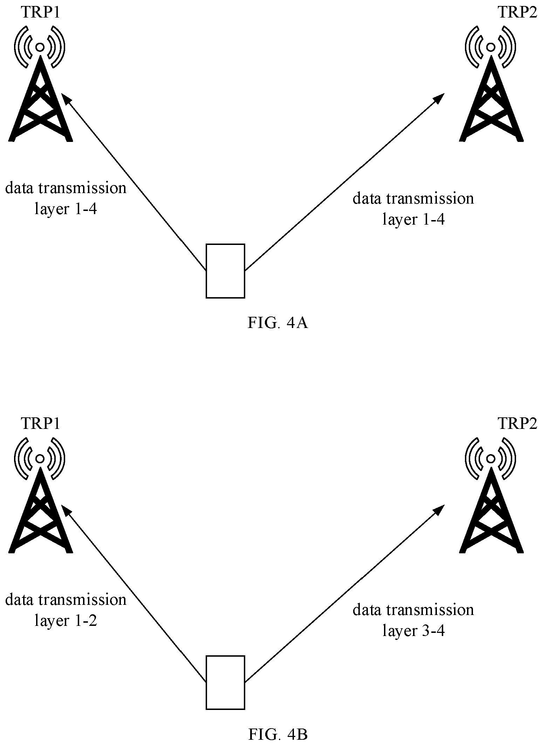

In some embodiments, multiple antenna panels of the terminal may use a NC-JT for the PUSCH transmission and/or PUCCH transmission. For example, a number of layers for two antenna panels of the terminal to perform a PUSCH data transmission is 4 layers, FIG. 4B shows the NC-JTs of the two antenna panels of the terminal to TRP1 and TRP2 respectively. At this time, a number of data transmission layers sent by the multiple antenna panels can be the same or different, and one data transmission layer does not need to be mapped to every antenna panel. For example, as shown in FIG. 4B, the data transmission layer 1-2 is mapped to one antenna panel of the terminal, and the data transmission layer 3-4 is mapped to another antenna panel of the terminal.

When the time-frequency resources used for the uplink transmission partially overlap or completely overlap, an uplink NC-JT is performed by using different code division multiplexing (CDM) groups in multiple DMRS ports associated with different TCIs;
or,
when the time-frequency resources used for the uplink transmission do not overlap at all, an uplink NC-JT is performed by using a same CDM group in multiple DMRS ports associated with different TCIs;
   or,
when the time-frequency resources used for the uplink transmission do not overlap at all, an uplink NC-JT is performed by using different CDM groups in multiple DMRS ports associated with different TCIs.

The CDM group is obtained by codeword encoding. If different encodings of orthogonal codewords are used, orthogonality between data can be achieved.

Since it is the NC-JT transmission, it can be determined based on the overlapping status of time-frequency domain resources to determine whether the DRMS ports associated with different TCIs are the same and whether the CDM groups used are the same.

In an embodiment, DMRS ports with different CDM groups have different quasi-co-located QCL type D associations;
or;
DMRS ports with different CDM groups have a same QCL type D association.

The quasi co-location (QCL) means that large-scale parameters of a channel experienced by a symbol on a certain antenna port can be inferred from a channel experienced by a symbol on another DMRS port. The large-scale parameters may include delay spread, average delay, Doppler spread, Doppler shift, average gain, and a spatial reception parameter.

The QCL of two DMRS ports in the sense of certain large-scale parameters means that these large-scale parameters of the two DMRS ports are the same. In other words, as long as certain large-scale parameters of the two DMRS ports are consistent, regardless of whether there are differences in their actual physical locations or corresponding antenna panel orientations, the terminal can determine that the two DMRS ports originate from the same location, i.e., quasi-co-located.

Considering the possible QCL association between various reference signals, from the perspective of simplifying signaling, several large-scale channel parameters are divided into the following 4 types in NR to facilitate the system to configure/instruct according to different scenarios:
QCL-TypeA: {Doppler shift, Doppler spread, average delay, delay spread};
except for the spatial reception parameter, the other large-scale parameters are the same;
for a frequency band below 6GHz, the spatial reception parameter may not be required;
QCL-TypeB: {Doppler shift, Doppler spread};
for the following two situations in a frequency band below 6GHz:
QCL-TypeC: {Doppler shift, average delay};
QCL-TypeD: { spatial reception parameter }.

In some embodiments, the uplink NC-JT is performed using different antenna panels.

For this NC-JT, the x^{th} TCI indicates a beam direction of an x^{th} antenna panel.

A number of layers associated with the x^{th} TCI is less than or equal to N-px; the N-px is a maximum number of data transmission layers supported by the x^{th} antenna panel.

That is, the number of data transmission layers configured for an antenna panel of the terminal may be less than or equal to the maximum number of data transmission layers supported by the antenna panel.

In some embodiments, an uplink coherent joint transmission (C-JT) is performed by different antenna panels.

For example, the number of layers for the two antenna panels of the terminal to perform PUSCH data transmission is 4 layers, FIG. 4 shows the C-JT of the two antenna panels of the terminal to TRP1 and TRP2 respectively. At this time, the numbers of the data transmission layers sent by the multiple antenna panels are the same, and each data transmission layer is transmitted.

If the multiple antenna panels of the terminal performs the uplink C-JT, a maximum number of data transmission layers associated with multiple TCIs is: min{N-p1, N-p2,...N-pX}.

The X is a total number of antenna panels of the terminal; the N-px is a maximum number of data transmission layers supported by an x^{th} antenna panel; and the x is a positive integer less than or equal to X.

If C-JT is used, the actual maximum number of data transmission layers that can be configured for the multiple antenna panels of the terminal to perform the uplink C-JT is: a minimum value of the maximum data transmission layers supported by the multiple antenna panels of the terminal C-JT for performing the uplink C-JT.

In some embodiments, the TCI includes:
a joint TCI;
a separate TCI;
spatial relationship information; or
a sounding reference signal resource indicator (SRI).

Under a unified TCI framework configuration, TCI can include: a joint TCI and a separate TCI.

The joint TCI can be used to determine directions of an uplink beam and a downlink beam. The uplink beam is used for uplink transmission, and the downlink beam is used for downlink reception.

The separate TCI can usually be used to determine a direction of an uplink beam or a direction of a downlink beam. A beam direction of the uplink beam, the separate TCI can be indicated by UL TCI.

In some embodiments, indication information of the TCI has multiple TCI fields. One TCI field indicates a TCI corresponding to one antenna panel of the terminal.

If the TCI under the unified TCI framework configuration is not used, the spatial relationship information (spatialRelationInfo1/2) can be used.

If the uplink beam directions of different antenna panels of the terminal are not indicated through the joint TCI or the separate TCI, the spatial relationship information can be used to indicate the uplink beam directions of different antenna panels of the terminal.

For example, the terminal has two antenna panels, thus, the TCI is indicated by two TCI fields, and one TCI field indicates that it is carried by one antenna panel.

In another embodiment, the indication information of the TCI has a TCI field; code points of the TCI field indicate TCIs corresponding to multiple antenna panels of the terminal.

At this time, the indication information of the TCI includes a unified TCI field, which includes one or more bits, and different bit values of these bits are different code points. Different code points in a TCI field can indicate the TCIs of multiple antenna panels of the terminal.

For example, the TCI field can be divided into multiple subfields, and one subfield indicates a TCI of one antenna panel. A subfield may include one or more bits.

As another example, one code point in the TCI field corresponds to a combination of multiple TCIs.

A sounding reference signal (SRS) can be used to estimate a downlink channel and perform downlink beamforming. There may be a corresponding relationship between the SRI of the SRS and the direction of the uplink beam. Therefore, the SRI of the SRS is one type of TCI corresponding to different antenna panels of the terminal.

In an embodiment, the TCI is carried by at least one of the following signaling:
downlink control information (DCI);
a media access control-control element (MAC-CE); or
a radio resource control (RRC) signaling.

For example, the uplink transmission includes a PUSCH transmission, and a PUSCH type of the PUSCH transmission includes at least one of the following:

A PUSCH scheduled with multiple downlink control information M-DCI;
a grant free configured grant (CG) PUSCH type 1; or
a grant free CG PUSCH type 2.

If the PUSCH is scheduled by multiple DCIs, different DCIs may come from different TRPs of the base station. The state values (state) of N TCIs suitable for simultaneous transmission are configured for the terminal based on the unified TCI framework.

If the MP/MTRP beam consistency holds, the TCIs of different panels of the terminal can be indicated through N different joint TCIs.

If MP/MTRP beam consistency does not hold, TCIs of the antenna panels during PUSCH transmission of the terminal can be jointly indicated through N separate UL TCIs.

For example, the terminal has only two antenna surfaces, that is, the number of antenna panels of the terminal is N=2, then the terminal is configured with 2 TCIs, which are simplified as TCI1 and TCI2. For example, the antenna panel corresponds to TCI1, and the antenna panel corresponds to TCI2.

Each TCI corresponds to the transmission/reception beam of one antenna panel of the terminal and faces one transmission TRP direction. Each TCI contains a different QCL Type-D source reference signal (QCL Type-D source RS), which may include at least one of the following:
a channel state information reference signal (CSI-RS); or
a synchronous signal broadcast channel block (SSB, Synchronous Signal/PBCH Block).

The terminal uses the antenna panel corresponding to the QCL Type-D source RS included in the TCI to perform transmission and reception. When the unified TCI framework is not configured, the spatial relationship information (spatialRelationInfo)1/2 indicated by the SRI combination is used.

Embodiments of the present disclosure provide a solution for sending uplink data to multiple TRPs for multiple antenna panels. The details can be as follows. An NC-JT transmission of multiple transmission and reception points (MTRP) can be performed based on PUSCH transmission or PUCCH transmission scheduled with M-DCI scheduling through followings:
each TCI associated with different CORSETPoolIndex schedules a same or different TBs of the PUSCH, and is associated with its respective data transmission layer (layer/layer set) and its respective DMRS ports or port combination.
each TCI associated with different CORSETPoolIndex schedules the same or different UCIs of the PUCCH, and is associated with the time-frequency domain resources corresponding to the PUCCH and their respective DMRS ports.

For the PUSCH transmission, the number of layers/layer sets corresponding to TCI1 may not be greater than N_p1, and the number of layers/layer sets corresponding to TCI2 may not be greater than N_p2. N_p1 is a maximum number of data transmission layers supported by antenna panel 1 of the terminal. N_p2 is a maximum number of data transmission layers supported by antenna panel 2 of the terminal.

The time-frequency domain resources occupied by different PUSCH transmissions and/or PUCCH transmissions may not overlap, partially overlap, or completely overlap.

The DMRS ports or port combinations of a PUSCH channel corresponding to different TCIs may come from the same CDM group according to a resource occupancy situation.

For a case where the time-frequency domain resources do not overlap, the DMRS port groups corresponding to different TCIs may be the same or different, and the CDM groups corresponding to different TCIs may be the same or different.

In a case where the time-frequency domain resources partially overlap, or completely overlap, different TCIs correspond to different DMRS port groups, and correspond to different CDM groups.

DMRS port groups corresponding to the same TCI can be allocated across CDM groups. When DMRS ports cross CDM groups, ports from different CDM groups belong to the same scheduling TRP as long as the QCL is the same.

Based on M-DCI PUSCH transmission and/or PUCCH transmission, the C-JT transmission of uplink MTRP can be implemented through the following solutions:
Applicable scenarios for the C-JT transmission of uplink MTRP: It is more suitable for devices such as Customer Premise Equipment (CPE) or a fixed wireless access (FWA) device.

Each TCI associated with different CORSETPoolIndex PUSCH schedules a same or different TBs, and is associated with its own set of layers/layer set and its corresponding set of DMRS ports or port combinations.

Each TCI associated with different CORSETPoolIndex schedules the same or different UCI of the PUCCH, and associates the time-frequency domain resources corresponding to the respective PUCCHs and the respective DMRS ports.

The number of layers/layer sets corresponding to TCI1 and TCI2 may not exceed min{N_p1,N_p2}.

The time-frequency domain resources occupied by different PUSCH transmissions do not overlap, the time-frequency domain resources partially overlap, or the time-frequency domain resources overlap completely.

The DMRS ports or port combinations corresponding to different TCIs can come from the same CDM group or different CDM groups according to a resource occupancy situation.

When the time-frequency resources of PUSCH transmission associated with different TCIs do not overlap, the DMRS port groups corresponding to different TCIs may be the same or different, and the CDM groups corresponding to different TCIs may be the same or different.

When the time-frequency resources of PUSCH transmission associated with different TCIs partially overlap or completely overlap, the DMRS port groups corresponding to different TCIs are different and belong to different CDM groups.

DMRS port groups corresponding to the same TCI can also be allocated across CDM groups. When DMRS ports cross CDM groups, ports from different CDM groups only need to have the same QCL.

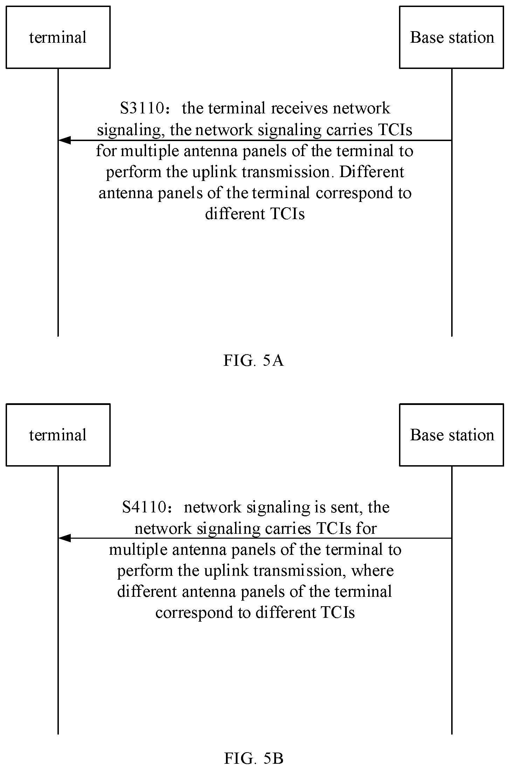

As shown in FIG. 5A, embodiments of the present disclosure provides a method for configuring an uplink transmission, which may include:
S3110, a terminal receives network signaling, the network signaling carries TCIs for multiple antenna panels of the terminal to perform the uplink transmission. Different antenna panels of the terminal correspond to different TCIs.

The uplink transmission may be: synchronous transmission of the multiple antenna panels of the terminal. In an embodiment, the uplink transmission includes one of the following:
a grant free uplink transmission;
an uplink transmission scheduled with DCI.

In an embodiment, different TCIs are associated with different control resource pool indexes (CORESTPoolIndex), where different control resource pool indexes are associated with different transmission and reception points (TRP) of a base station.

In an embodiment, the uplink transmission includes: a PUSCH transmission.

One TCI is associated with one transport block TB of the PUSCH. One TCI is associated with one transport block TB of the PUSCH.

In an embodiment, different TCIs are used for the transmission of a same transport block TB;
or,
different TCIs are used for the transmission of different TBs.

In an embodiment, the uplink transmission includes: a PUCCH transmission.

One TCI is associated with one UCI transmitted by the PUCCH.

In an embodiment, different TCIs are used for the transmission of the same UCI;
or,
different TCIs are used for the transmission of different UCIs.

In an embodiment, one TCI is associated with one DMRS port combination of the terminal.

One DMRS port combination includes: one or more DMRS ports of the terminal.

In an embodiment, one TCI is associated with a data transmission layer set; one data transmission layer set includes: one or more data transmission layers.

In an embodiment, the time-frequency resources of different uplink transmissions do not overlap;
or,
the time-frequency resources of different uplink transmissions partially overlap;
   or,
the time-frequency resources of different uplink transmissions completely overlap.

In an embodiment, when the time-frequency resources used for the uplink transmission partially overlap or completely overlap, an uplink NC-JT is performed by using different CDM groups in multiple DMRS ports associated with different TCIs;
or,
when the time-frequency resources used for the uplink transmission do not overlap completely, an uplink NC-JT is performed by using a same CDM group in a plurality of DMRS ports associated with different TCIs;
   or,
when the time-frequency resources used for the uplink transmission do not overlap at all, an uplink NC-JT is performed by using different CDM groups in a plurality of DMRS ports associated with different TCIs.

In an embodiment, the DMRS ports with different CDM groups have different QCL type D associations;
or;
DMRS ports with different CDM groups have the same QCL type D association.

In an embodiment, the uplink non-coherent transmission NC-JT is performed using different antenna panels.

In an embodiment, an x^{th} TCI indicates a beam direction of an x^{th} antenna panel.

The number of layers associated with the x^{th} TCI is less than or equal to N-px; wherein the N-px is a maximum number of data transmission layers supported by the x^{th} antenna panel.

In an embodiment, an uplink coherent joint transmission (C-JT) is performed by different antenna panels.

In an embodiment, the maximum number of data transmission layers associated with multiple TCIs is: min{N-p1, N-p2,...N-pX};
where, the X is a total number of antenna panels of the terminal; the N-px is a maximum number of data transmission layers supported by an x^{th} antenna panel; and the x is a positive integer less than or equal to X.

In an embodiment, the TCI includes one of the following:
a joint TCI;
a separate TCI;
spatial relationship information; or
a sounding reference signal resource indicator (SRI).

In an embodiment, the TCI indication information includes multiple TCI fields.

One TCI field indicates a TCI corresponding to one antenna panel of the terminal.

In an embodiment, indication information of the TCI has a TCI field.

Code points of the TCI field indicate TCIs corresponding to multiple antenna panels of the terminal.

In an embodiment, the TCI is carried by at least one of the following signaling methods:
DCI;
MAC-CE; or
RRC signaling.

In an embodiment, the uplink transmission includes a PUSCH transmission, and a PUSCH type of the PUSCH transmission includes at least one of the following:
a PUSCH scheduled with M-DCI;
a grant free CG PUSCH type 1; or
a grant free CG PUSCH type 2.

As shown in FIG. 5B, embodiments of the present disclosure provides a method for configuring an uplink transmission, which may include:
S4110, network signaling is sent, the network signaling carries TCIs for multiple antenna panels of the terminal to perform the uplink transmission, where different antenna panels of the terminal correspond to different TCIs.

The uplink transmission may be: synchronous transmission of the multiple antenna panels of the terminal. In an embodiment, the uplink transmission includes one of the following:
a grant free uplink transmission; or
an uplink transmission scheduled with DCI.

In an embodiment, different TCIs are associated with different control resource pool indexes (CORESTPoolIndex), where different control resource pool indexes are associated with different transmission and reception points (TRPs) of a base station.

In an embodiment, the uplink transmission includes: a PUSCH transmission.

One TCI is associated with one transport block TB of the PUSCH. One TCI is associated with one transport block TB of the PUSCH.

In an embodiment, different TCIs are used for the transmission of a same transport block TB;
or,
different TCIs are used for the transmission of different TBs.

In an embodiment, the uplink transmission includes: a PUCCH transmission.

One TCI is associated with one UCI transmitted by the PUCCH.

In an embodiment, different TCIs are used for the transmission of the same UCI;
or,
different TCIs are used for the transmission of different UCIs.

In an embodiment, one TCI is associated with one DMRS port combination of the terminal.

One DMRS port combination includes: one or more DMRS ports of the terminal.

In an embodiment, one TCI is associated with a data transmission layer set; one data transmission layer set includes: one or more data transmission layers.

In an embodiment, the time-frequency resources of different uplink transmissions do not overlap;
or,
the time-frequency resources of different uplink transmissions partially overlap;
   or,
the time-frequency resources of different uplink transmissions completely overlap.

In an embodiment, when the time-frequency resources used for the uplink transmission partially overlap or completely overlap, an uplink NC-JT is performed by using different CDM groups in multiple DMRS ports associated with different TCIs;
or,
when the time-frequency resources used for the uplink transmission do not overlap completely, an uplink NC-JT is performed by using a same CDM group in a plurality of DMRS ports associated with different TCIs;
   or,
when the time-frequency resources used for the uplink transmission do not overlap at all, an uplink NC-JT is performed by using different CDM groups in a plurality of DMRS ports associated with different TCIs.

In an embodiment, the DMRS ports with different CDM groups have different quasi-co-located QCL type D associations;
or;
DMRS ports with different CDM groups have the same QCL type D association.

In an embodiment, the uplink non-coherent transmission NC-JT is performed using different antenna panels.

In an embodiment, an x^{th} TCI indicates a beam direction of an x^{th} antenna panel.

The number of layers associated with the x^{th} TCI is less than or equal to N-px; wherein the N-px is a maximum number of data transmission layers supported by the x^{th} antenna panel.

In an embodiment, an uplink coherent joint transmission (C-JT) is performed by different antenna panels.

In an embodiment, the maximum number of data transmission layers associated with multiple TCIs is: min{N-p1, N-p2,...N-pX};
where, the X is a total number of antenna panels of the terminal; the N-px is a maximum number of data transmission layers supported by an x^{th} antenna panel; and the x is a positive integer less than or equal to X.

In an embodiment, the TCI includes one of the following:
a joint TCI;
a separate TCI;
spatial relationship information; or
a sounding reference signal resource indicator (SRI).

In an embodiment, the TCI indication information has multiple TCI fields;

One TCI field indicates a TCI corresponding to one antenna panel of the terminal.

In an embodiment, indication information of the TCI has a TCI field.

Code points of the TCI field indicate TCIs corresponding to multiple antenna panels of the terminal.

In an embodiment, the TCI is carried by at least one of the following signaling methods:
DCI;
MAC-CE; or
RRC signaling.

In an embodiment, the uplink transmission includes a PUSCH transmission, and a PUSCH type of the PUSCH transmission includes at least one of the following:
a PUSCH scheduled with M-DCI;
a grant free CG PUSCH type 1; or
a grant free CG PUSCH type 2.

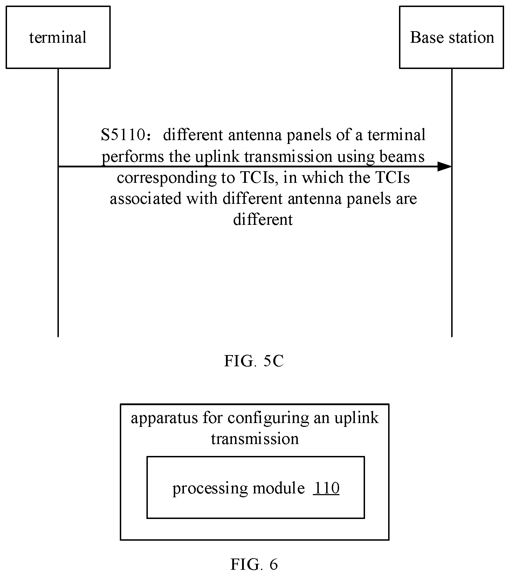

As shown in FIG. 5C, embodiments of the present disclosure provides a method for configuring an uplink transmission, which may include:
S5110, different antenna panels of a terminal performs the uplink transmission using beams corresponding to TCIs, in which the TCIs associated with different antenna panels are different.

Correspondingly, a base station may receive the uplink transmission sent by the different antenna panels of the terminal according to the beams corresponding to the TCIs.

In an embodiment, the uplink transmission includes one of the following:
a grant free uplink transmission; or
an uplink transmission scheduled with DCI.

In an embodiment, different TCIs are associated with different control resource pool indexes (CORESTPoolIndex), where different control resource pool indexes are associated with different transmission and reception points (TRPs) of the base station.

In an embodiment, the uplink transmission includes: a PUSCH transmission.

One TCI is associated with one transport block TB of the PUSCH. One TCI is associated with one transport block TB of the PUSCH.

In an embodiment, different TCIs are used for the transmission of a same transport block TB;
or,
different TCIs are used for the transmission of different TBs.

In an embodiment, the uplink transmission includes: a PUCCH transmission.

One TCI is associated with one UCI transmitted by the PUCCH.

In an embodiment, different TCIs are used for the transmission of the same UCI;
or,
different TCIs are used for the transmission of different UCIs.

In an embodiment, one TCI is associated with one DMRS port combination of the terminal.

One DMRS port combination includes: one or more DMRS ports of the terminal.

In an embodiment, one TCI is associated with a data transmission layer set; one data transmission layer set includes: one or more data transmission layers.

In an embodiment, the time-frequency resources of different uplink transmissions do not overlap;
or,
the time-frequency resources of different uplink transmissions partially overlap;
   or,
the time-frequency resources of different uplink transmissions completely overlap.

In an embodiment, when the time-frequency resources used for the uplink transmission partially overlap or completely overlap, an uplink NC-JT is performed by using different CDM groups in multiple DMRS ports associated with different TCIs;
or,
when the time-frequency resources used for the uplink transmission do not overlap completely, an uplink NC-JT is performed by using a same CDM group in a plurality of DMRS ports associated with different TCIs;
   or,
when the time-frequency resources used for the uplink transmission do not overlap at all, an uplink NC-JT is performed by using different CDM groups in a plurality of DMRS ports associated with different TCIs.

In an embodiment, the DMRS ports with different CDM groups have different quasi-co-located QCL type D associations;
or;
DMRS ports with different CDM groups have the same QCL type D association.

In an embodiment, the uplink non-coherent transmission NC-JT is performed using different antenna panels.

In an embodiment, an x^{th} TCI indicates a beam direction of an x^{th} antenna panel.

The number of layers associated with the x^{th} TCI is less than or equal to N-px; wherein the N-px is a maximum number of data transmission layers supported by the x^{th} antenna panel.

In an embodiment, an uplink coherent joint transmission (C-JT) is performed by different antenna panels.

In an embodiment, the maximum number of data transmission layers associated with multiple TCIs is: min{N-p1, N-p2,...N-pX};
where, the X is a total number of antenna panels of the terminal; the N-px is a maximum number of data transmission layers supported by an x^{th} antenna panel; and the x is a positive integer less than or equal to X.

In an embodiment, the TCI includes one of the following:
a joint TCI;
a separate TCI;
spatial relationship information; or
a sounding reference signal resource indicator (SRI).

In an embodiment, the TCI indication information has multiple TCI fields.

One TCI field indicates a TCI corresponding to one antenna panel of the terminal.

In an embodiment, indication information of the TCI has a TCI field.

Code points of the TCI field indicate TCIs corresponding to multiple antenna panels of the terminal.

In an embodiment, the TCI is carried by at least one of the following signaling methods:
DCI;
MAC-CE; or
RRC signaling.

In an embodiment, the uplink transmission includes a PUSCH transmission, and a PUSCH type of the PUSCH transmission includes at least one of the following:
a PUSCH scheduled with M-DCI;
a grant free CG PUSCH type 1; or
a grant free CG PUSCH type 2.

As shown in FIG. 6, embodiments of the present disclosure provides an apparatus for configuring an uplink transmission, which may include:
a processing module, configured to, for the uplink transmission, configure different transmission configuration indications (TCIs) for different antenna panels of a terminal.

The apparatus for configuring an uplink transmission may include a base station.

In some embodiments, the apparatus for configuring an uplink transmission may include antenna panels for transmitting the TCIs.

In some embodiments, the uplink transmission includes one of the following:
a grant free uplink transmission; or
an uplink transmission scheduled with multiple downlink control information (M-DCI).

In some embodiments, different TCIs are associated with different control resource pool indexes (CORESTPoolIndex), where different control resource pool indexes are associated with different transmission and reception points (TRPs) of the base station.

In some embodiments, the uplink transmission includes: a PUSCH transmission.

One TCI is associated with one transport block TB of the PUSCH transmission.

In some embodiments, different TCIs are used for the transmission of the same transport block TB;
or,
Different TCIs are used for the transmission of different TBs.

In some embodiments, the uplink transmission includes: a PUCCH transmission.

One TCI is associated with one UCI transmitted by the PUCCH.

In some embodiments, different TCIs are used for the transmission of the same UCI;
or,
Different TCIs are used for the transmission of different UCIs.

In some embodiments, one TCI is associated with one DMRS port combination of the terminal.

One DMRS port combination includes: one or more DMRS ports of the terminal.

In some embodiments, one TCI is associated with a data transmission layer set; one data transmission layer set includes: one or more data transmission layers.

In some embodiments, the time-frequency resources of different uplink transmissions do not overlap;
or,
the time-frequency resources of different uplink transmissions partially overlap;
   or,
the time-frequency resources of different uplink transmissions completely overlap.

In some embodiments, when the time-frequency resources used for the uplink transmission partially overlap or completely overlap, an uplink NC-JT is performed by using different CDM groups in multiple DMRS ports associated with different TCIs;
or,
when the time-frequency resources used for the uplink transmission do not overlap completely, an uplink NC-JT is performed by using a same CDM group in a plurality of DMRS ports associated with different TCIs;
   or,
when the time-frequency resources used for the uplink transmission do not overlap at all, an uplink NC-JT is performed by using different CDM groups in a plurality of DMRS ports associated with different TCIs.

In some embodiments, the DMRS ports with different CDM groups have different quasi-co-located QCL type D associations;
or;
DMRS ports with different CDM groups have the same QCL type D association.

In some embodiments, the uplink non-coherent transmission NC-JT is performed using different antenna panels.

In some embodiments, an x^{th} TCI indicates a beam direction of an x^{th} antenna panel.

The number of layers associated with the x^{th} TCI is less than or equal to N-px; wherein the N-px is a maximum number of data transmission layers supported by the x^{th} antenna panel.

In some embodiments, an uplink coherent joint transmission (C-JT) is performed by different antenna panels.

In some embodiments, the maximum number of data transmission layers associated with multiple TCIs is: min{N-p1, N-p2,...N-pX};
where, the X is a total number of antenna panels of the terminal; the N-px is a maximum number of data transmission layers supported by an x^{th} antenna panel; and the x is a positive integer less than or equal to X.

In some embodiments, the TCI includes one of the following:
a joint TCI;
a separate TCI;
spatial relationship information; or
a sounding reference signal resource indicator (SRI).

In some embodiments, the TCI indication information has multiple TCI fields.

One TCI field indicates a TCI corresponding to one antenna panel of the terminal.

In some embodiments, the TCI indication information has a TCI field;
Code points of the TCI field indicate TCIs corresponding to multiple antenna panels of the terminal.

In some embodiments, the TCI is carried by at least one of the following signaling methods:
DCI;
MAC-CE; or
RRC signaling.

In some embodiments, the uplink transmission includes a PUSCH transmission, and a PUSCH type of the PUSCH transmission includes at least one of the following:
a PUSCH scheduled with M-DCI;
a grant free CG PUSCH type 1; or
a grant free CG PUSCH type 2.

Embodiments of the present disclosure provide a communication device, including:
a memory used to store instructions executable by the processor; and
a processor, connected to the memory.

The processor is configured to execute the method for configuring an uplink transmission provided by any of the foregoing technical solutions.

The processor may include various types of storage media, which are non-transitory computer storage media that can continue to store information stored thereon after the communication device is powered off.

The communication device includes: a terminal or a network element, and the network element may be any one of the aforementioned first to fourth network elements.

The processor may be connected to the memory through a bus or the like, to read the executable program stored on the memory, such as at least one of the methods shown in FIG. 2 and FIG. 5A to FIG. 5C.

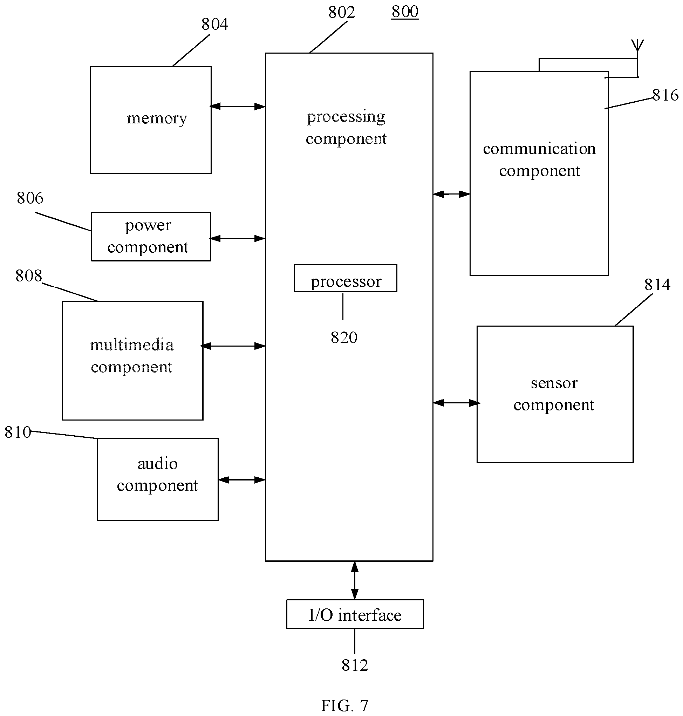

FIG. 7 is a block diagram of a terminal 800 according to an embodiment of the disclosure. For example, the terminal 800 may be a mobile phone, a computer, a digital broadcasting terminal, a messaging device, a game console, a tablet device, a medical equipment, a fitness equipment, a personal digital assistant, and so on.

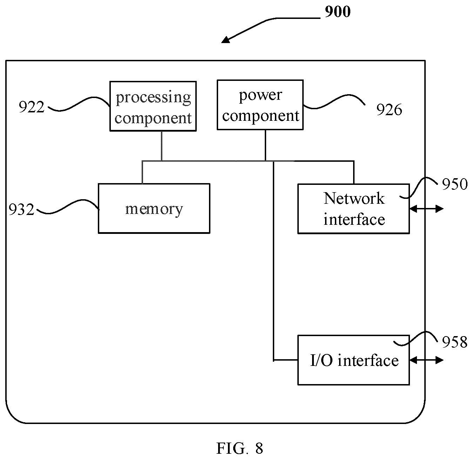

Referring to FIG. 8, the terminal 800 may include one or more components of the followings: a processing component 802, a memory 804, a power supply component 806, a multimedia component 808, an audio component 810, an input/output (I/O) interface 812, a sensor component 814, and a communication component 816.

The processing component 802 generally controls the whole operation of the terminal 800, such as the operations related to display, phone call, data communication, camera operation and recording operation. The processing component 802 may include one or more processors 820 to perform instructions, to complete all or part of steps of the above method. In addition, the processing component 802 may include one or more modules for the convenience of interaction between the processing component 802 and other components. For example, the processing component 802 may include a multimedia module for the convenience of interaction between the multimedia component 808 and the processing component 802.

The memory 804 is configured to store various types of data to support the operation of the terminal 800. Examples of the data include the instructions of any applications or methods operated on the terminal 800, contact data, phone book data, messages, pictures, videos, etc. The memory 804 may be implemented by any type of temporary or non-temporary storage devices or their combination, such as a static random access memory (SRAM), an electrically erasable programmable read-only memory (EEPROM), an electrically programmable read-only memory (EPROM), a programmable read-only memory (PROM), a read-only memory (ROM), a magnetic memory, a flash memory, a magnetic disk or an optical disk.

The power supply component 806 may provide power for all components of the terminal 800. The power supply component 806 may include a power supply management system, one or more power supplies, and other units related to generating, managing and distributing power for the terminal 800.

The multimedia component 808 includes a screen provided an output interface between the terminal 800 and the user. In some embodiments, the screen may include a liquid crystal display (LCD) and a touch panel (TP). When the screen includes a TP, the screen may be implemented as a touch screen to receive an input signal from the user. The touch panel includes one or more touch sensors to sense touching, sliding and gestures on the touch panel. The touch sensor may not only sense the boundary of a touch or slide action, but also detect the duration and pressure related to the touch or slide operation. In some embodiments, the multimedia component 808 includes a front camera and/or a rear camera. When the terminal 800 is in an operation mode, such as a shooting mode or a video mode, the front camera or the rear camera may receive the external multimedia data. Each front camera and rear camera may be a fixed optical lens system or an optical lens system with a focal length and an optical zoom capacity.

The audio component 810 is configured to output and/or input an audio signal. For example, the audio component 810 includes a microphone (MIC). When the terminal 800 is in an operation mode, such as a call mode, a record mode, and a speech recognition mode, the microphone is configured to receive an external audio signal. The received audio signal may be further stored in the memory 804 or sent via the communication component 816. In some embodiments, the audio component 810 further includes a speaker configured to output an audio signal.

The I/O interface 812 provides an interface for the processing component 802 and the peripheral interface module, and the peripheral interface module may be a keyboard, a click wheel, a button, etc. The button may include is but not limited to a home button, a volume button, a start button and a lock button.

The sensor component 814 includes one or more sensors, configured to provide various aspects of status assessment for the terminal 800. For example, the sensor component 814 may detect the on/off state of the terminal 800 and the relative positioning of the component. For example, the component is a display and a keypad of the terminal 800. The sensor component 814 may further detect the location change of the terminal 800 or one component of the terminal 800, the presence or absence of contact between the user and the terminal 800, the orientation or acceleration/deceleration of the terminal 800, and the temperature change of the terminal 800. The sensor component 814 may include a proximity sensor configured to detect the existence of the objects nearby without any physical contact. The sensor component 814 may further include a light sensor such as a complementary metal oxide semiconductor (CMOS) or a charge-coupled device (CCD) image sensor, which is configured to use in imaging applications. In some embodiments, the sensor component 814 may further include an acceleration transducer, a gyroscope sensor, a magnetic sensor, a pressure sensor or a temperature sensor.

The communication component 816 is configured for the convenience of wire or wireless communication between the terminal 800 and other devices. The terminal 800 may access wireless networks based on communication standard, such as Wi-Fi, 2G or 3G, or their combination. In an embodiment, the communication component 816 receives broadcast signals or broadcast-related information from an external broadcast management system via a broadcast channel. In an embodiment, the communication component 816 further includes a near field communication (NFC) module to facilitate short-range communication. For example, the NFC module may be achieved based on a radio frequency identification (RFID) technology, an infrared data association (IrDA) technology, an ultra-wide band (UWB) technology, a blue tooth (BT) technology and other technologies.

In an embodiment, the terminal 800 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above methods.

In an embodiment, a non-transitory computer-readable storage medium is further provided which includes instructions, such as the memory 804 including instructions, the instructions may be executed by the processor 820 of the terminal 800 to complete the above methods. For example, the non-transitory computer-readable storage medium may be a ROM, a random access memory (RAM), a CD-ROM, a magnetic tape, a floppy disk, an optical data storage device, etc.

As shown in FIG. 8, embodiments of the present disclosure shows a structure of a communication device 900. For example, the communication device 900 may be provided as a network device. The communication device 900 may be the aforementioned base station.

Referring to FIG. 8, the communications device 900 includes a processing component 922, which further includes one or more processors, and memory resources represented by a memory 932 for storing instructions, such as application programs, executable by the processing component 922. The application program stored in memory 932 may include one or more modules, each corresponding to a set of instructions. In addition, the processing component 922 is configured to execute instructions to perform any method performed by the above-mentioned method on the base station, for example, at least one of the methods shown in FIG. 2 and FIG. 5A to FIG. 5C.

The communication device 900 may also include a power supply component 926 configured to perform power management of the communication device 900, a wired or wireless network interface 950 configured to connect the communication device 900 to a network, and an input-output (I/O) interface 958. The communications device 900 may operate based on an operating system stored in the memory 932, such as Windows Server^{™}, Mac OS X^{™}, Unix^{™}, Linux^{™}, FreeBSD^{™} or the like.

After considering the specification and practicing the disclosure herein, those skilled in the art will easily think of other implementations of embodiments of the disclosure. The disclosure is intended to cover any variations, usages, or adaptive changes of the disclosure. These variations, usages, or adaptive changes follow the general principles of the disclosure and include common knowledge or conventional technical means in the technical field not disclosed by the disclosure. The description and the embodiments are to be regarded as exemplary only, and the true scope and spirit of the disclosure are given by the appended claims.

It should be understood that the disclosure is not limited to the precise structure described above and shown in the drawings, and various modifications and changes may be made without departing from its scope. The scope of the present disclosure is only limited by the appended claims.

## Claims

1. A method for configuring an uplink transmission, comprising:
for the uplink transmission, configuring different transmission configuration indications (TCIs) for different antenna panels of a terminal.

2. The method according to claim 1, wherein the uplink transmission comprises one of:
a grant free uplink transmission; or
an uplink transmission scheduled with downlink control information (DCI).

3. The method according to claim 1 or 2, wherein different TCIs are associated with different control resource pool indexes (CORESTPoolIndex), wherein different control resource pool indexes are associated with different transmission and reception points (TRPs) of a base station.

4. The method according to claim 3, wherein the uplink transmission comprises: a physical uplink shared channel (PUSCH) transmission;
wherein one TCI is associated with one transport block (TB) of the PUSCH, one TCI is associated with one TB of the PUSCH.

5. The method according to claim 4, wherein
different TCIs are used for transmission of a same TB;
or,
different TCIs are used for transmission of different TBs.

6. The method according to claim 3, wherein the uplink transmission comprises: a physical uplink control channel (PUCCH) transmission;
wherein one TCI is associated with one uplink control information (UCI) of the PUCCH transmission.

7. The method according to claim 6, wherein
different TCIs are used for transmission of a same UCI;
or,
different TCIs are used for transmission of different UCIs.

8. The method according to any one of claims 1 to 7, wherein one TCI is associated with one demodulation reference signal (DMRS) port combination of the terminal;
wherein, one DMRS port combination comprises one or more DMRS ports of the terminal.

9. The method according to claim 8, wherein one TCI is associated with a data transmission layer set; and one data transmission layer set comprises one or more data transmission layers.

10. The method according to claim 9, wherein
time-frequency resources of different uplink transmissions do not overlap;
or,
time-frequency resources of different uplink transmissions partially overlap;
or,
time-frequency resources of different uplink transmissions completely overlap.

11. The method according to claim 10, wherein:
when the time-frequency resources used for the uplink transmission partially overlap or completely overlap, an uplink non-coherent joint transmission (NC-JT) is performed by using different code division multiplexing (CDM) groups in a plurality of DMRS ports associated with different TCIs;
or,
when the time-frequency resources used for the uplink transmission do not overlap completely, an uplink NC-JT is performed by using a same CDM group in a plurality of DMRS ports associated with different TCIs;
or,
when the time-frequency resources used for the uplink transmission do not overlap completely, an uplink NC-JT is performed by using different CDM groups in a plurality of DMRS ports associated with different TCIs.

12. The method according to claim 11, wherein
DMRS ports with different CDM groups have different quasi-co-located (QCL) type D associations;
or;
DMRS ports with different CDM groups have a same QCL type D association.

13. The method according to any one of claims 1 to 12, wherein an uplink NC-JT is performed by different antenna panels.

14. The method according to claim 13, wherein an x^{th} TCI indicates a beam direction of an x^{th} antenna panel;
wherein a number of layers associated with the x^{th} TCI is less than or equal to N-px; wherein the N-px is a maximum number of data transmission layers supported by the x^{th} antenna panel.

15. The method according to any one of claims 1 to 12, wherein an uplink coherent joint transmission (C-JT) is performed by different antenna panels.

16. The method according to claim 11, wherein a maximum number of data transmission layers associated with a plurality of TCIs is: min{N-p1, N-p2,...N-pX};
wherein, the X is a total number of antenna panels of the terminal; the N-px is a maximum number of data transmission layers supported by an x^{th} antenna panel; and the x is a positive integer less than or equal to X.

17. The method according to any one of claims 1 to 16, wherein the TCI comprises one of:
a joint TCI;
a separate TCI;
spatial relationship information; or
a sounding reference signal resource indicator (SRI).

18. The method according to any one of claims 1 to 17, wherein,
indication information of a TCI comprising a plurality of TCI fields;
wherein one TCI field indicates a TCI corresponding to one antenna panel of the terminal.

19. The method according to any one of claims 1 to 14, wherein indication information of the TCI has a TCI field;
code points of the TCI field indicate TCIs corresponding to a plurality of antenna panels of the terminal.

20. The method according to any one of claims 1 to 17, wherein
the TCI is carried by at least one of following signalings:
downlink control information (DCI);
a media access control-control element (MAC-CE); or
a radio resource control (RRC) signaling.

21. The method according to any one of claims 1 to 20, wherein the uplink transmission comprises a physical uplink shared channel (PUSCH) transmission, and a PUSCH type of the PUSCH transmission comprises at least one of:
a PUSCH scheduled with multiple downlink control information (M-DCI);
a grant free configured grant (CG) PUSCH type 1; or
a grant free CG PUSCH type 2.

22. An apparatus for configuring an uplink transmission, comprising:
a processing module, configured to, for the uplink transmission, configure different transmission configuration indications (TCIs) for different antenna panels of a terminal.

23. The apparatus according to claim 22, wherein the uplink transmission comprises one of:
a grant free uplink transmission; or
an uplink transmission scheduled with multiple downlink control information (M-DCI).

24. The apparatus according to claim 22 or 23, wherein different TCIs are associated with different control resource pool indexes (CORESTPoolIndex), wherein different control resource pool indexes are associated with different transmission and reception points (TRPs) of a base station.

25. The apparatus according to claim 24, wherein the uplink transmission comprises: a physical uplink shared channel (PUSCH) transmission;
wherein one TCI is associated with one transport block (TB) of the PUSCH transmission.

26. The apparatus according to claim 25, wherein
different TCIs are used for transmission of a same TB;
or,
different TCIs are used for transmission of different TBs.

27. The apparatus according to claim 24, wherein the uplink transmission comprises: a physical uplink control channel (PUCCH) transmission;
wherein one TCI is associated with one uplink control information (UCI) of the PUCCH transmission.

28. The apparatus according to claim 27, wherein
different TCIs are used for transmission of a same UCI;
or,
different TCIs are used for transmission of different UCIs.

29. The apparatus according to any one of claims 22 to 28, wherein one TCI is associated with one demodulation reference signal (DMRS) port combination of the terminal;
wherein, one DMRS port combination comprises one or more DMRS ports of the terminal.

30. The apparatus according to claim 29, wherein one TCI is associated with a data transmission layer set; and one data transmission layer set comprises one or more data transmission layers.

31. The apparatus according to claim 30, wherein
time-frequency resources of different uplink transmissions do not overlap;
or,
time-frequency resources of different uplink transmissions partially overlap;
or,
time-frequency resources of different uplink transmissions completely overlap.

32. The apparatus according to claim 31, wherein
when the time-frequency resources used for the uplink transmission partially overlap or completely overlap, an uplink non-coherent joint transmission (NC-JT) is performed by using different code division multiplexing (CDM) groups in a plurality of DMRS ports associated with different TCIs;
or,
when the time-frequency resources used for the uplink transmission do not overlap completely, an uplink NC-JT is performed by using a same CDM group in a plurality of DMRS ports associated with different TCIs;
or,
when the time-frequency resources used for the uplink transmission do not overlap completely, an uplink NC-JT is performed by using different CDM groups in a plurality of DMRS ports associated with different TCIs.

33. The apparatus according to claim 32, wherein
DMRS ports with different CDM groups have different quasi-co-located (QCL) type D associations;
or;
DMRS ports with different CDM groups have a same QCL type D association.

34. The apparatus according to any one of claims 22 to 33, wherein an uplink NC-JT is performed by different antenna panels.

35. The apparatus according to claim 34, wherein an x^{th} TCI indicates a beam direction of an x^{th} antenna panel;
wherein a number of layers associated with the x^{th} TCI is less than or equal to N-px; wherein the N-px is a maximum number of data transmission layers supported by the x^{th} antenna panel.

36. The apparatus according to any one of claims 22 to 33, wherein an uplink coherent joint transmission (C-JT) is performed by different antenna panels.

37. The apparatus according to claim 34, wherein a maximum number of data transmission layers associated with a plurality of TCIs is: min{N-p1, N-p2,...N-pX};
wherein, the X is a total number of antenna panels of the terminal; the N-px is a maximum number of data transmission layers supported by an x^{th} antenna panel; and the x is a positive integer less than or equal to X.

38. The apparatus according to any one of claims 22 to 37, wherein the TCI comprises one of:
a joint TCI;
a separate TCI;
spatial relationship information; or
a sounding reference signal resource indicator (SRI).

39. The apparatus according to any one of claims 22 to 38, wherein,
indication information of a TCI comprising a plurality of TCI fields;
wherein one TCI field indicates a TCI corresponding to one antenna panel of the terminal.

40. The apparatus according to any one of claims 22 to 39, wherein indication information of the TCI has a TCI field;
code points of the TCI field indicate TCIs corresponding to a plurality of antenna panels of the terminal.

41. The apparatus according to any one of claims 1 to 38, wherein
the TCI is carried by at least one of the following signalings:
downlink control information (DCI);
a media access control-control element (MAC-CE); or
a radio resource control (RRC) signaling.

42. The method according to any one of claims 22 to 41, wherein the uplink transmission comprises a physical uplink shared channel (PUSCH) transmission, and a PUSCH type of the PUSCH transmission comprises at least one of:
a PUSCH scheduled with multiple downlink control information (M-DCI);
a grant free configured grant (CG) PUSCH type 1; or
a grant free CG PUSCH type 2.

43. A communication device, comprising a processor, a transceiver, a memory, and an executable program stored in the memory and capable of being executed by the processor, wherein when the processor executes the executable program, the processor performs the method according to any one of claims 1 to 21.

44. A computer storage medium having an executable program stored thereon that, when executed by a processor, the method according to any one of claims 1 to 21 is implemented.
